# EUROPEAN PATENT APPLICATION

(11) **EP 3 065 024 A1**
(43) Date of publication of application: **07.09.2016**
(21) Application number: 15380008.1
(22) Date of filing: 06.03.2015
(51) Int. Cl.: G06F 1/16

(54) **WEARABLE CAMERA APPARATUS WITH SELECTABLE PROCESSING OF IMAGE CONTENT**

(71) Applicant: Universidad de Sevilla, 41013 Sevilla (ES); Consejo Superior De Investigaciones Científicas (CSIC), 28006 Madrid (ES)
(72) Inventor: Vázquez, Ángel Rodríguez, 41013 Sevilla (ES); Galán, Ricardo Carmona, 28006 Madrid (ES); Berni, Jorge Fernández, 41013 Sevilla (ES)
(74) Representative: Pons Ariño, Angel

(57) **Abstract**

Wearable camera apparatus comprising at least a camera device, a memory module, a battery module and a processor. It also comprises a switch which is operable to select one of at least two operation modes that are mutually exclusive: a first operation mode which comprises capturing an image and storing the image in the memory, and a second operation mode which comprises capturing an image, possibly altering the image in the processor and storing said altered image in the memory. A method of processing images for object obfuscation is also provided. The method is carried out by the wearable camera apparatus herein described.

## Description

### OBJECT OF THE INVENTION

The present invention describes a camera apparatus which is adapted to be wearable by a human subject in a manner that the captured images represent surroundings of the human subject. The apparatus implements at least two mutually exclusive operation modes that may be enabled at any moment by the human subject wearing it. In one operation mode, the captured images are permanently stored in the memory of the apparatus without any alteration of their content for their eventual readout. In another operation mode, the captured images are altered before being permanently stored in the memory of the apparatus for their eventual readout. The alteration of the image content in this operation mode is performed by a processor of the apparatus which is configured to search for prescribed objects within each captured image. When detected, such objects are obfuscated and the altered image is then stored in the memory. A display showing the apparatus status informs the human subject wearing the system as well as other human subjects around whether the captured images are being stored unaltered or they are undergoing processing for prescribed object obfuscation.

### BACKGROUND OF THE INVENTION

Cameras are becoming pervasive thanks to the increasing performance of chips and system components that simultaneously feature decreasing form factors. Wearables cameras constitute one of the latest advances in this sense. They are designed to capture images automatically, regularly and autonomously that represent surroundings of the human subjects wearing them. Different wearables cameras are already commercially available [Autographer, http://www:autographer.com/#home]; [Narrative clip, http://getnarrative.com/]; [CA7CH, http://www.ca7ch.com/]; [Go Pro, http://www.gopro.com/]. In addition to the hardware device itself, specific software is also provided in order to deal with the massive amount of information recorded by these cameras. This software usually includes functionalities tailored to easily share such information on the Internet through social networks, mobile applications etc. The fact that wearables cameras are designed to take images unnoticeably - for convenience of the human subjects wearing them - together with the fact that no constraints are imposed on the content of the recorded material raise serious privacy concerns. For the time being, the issue of privacy exclusively relies on the propriety of users of wearable cameras. However, as these devices become more popular, people's privacy will progressively become at greater risk.

Various studies have recently been conducted addressing the issue of privacy concerning wearable cameras [R. Templeman et al, "PlaceAvoider: Steering First-Person Cameras away from Sensitive Spaces," in proceedings of Network and Distributed System Security Symposium 2014]; [R. Hoyle et al, "Privacy Behaviors of Lifeloggers using Wearable Cameras," in proceedings of ACM International Joint Conference on Pervasive and Ubiquitous Computing (UbiComp) 2014]; [S. Jana et al, "Protecting user privacy from perceptual applications," In proceedings of the 34th IEEE Symposium on Security & Privacy 2013]. These studies pose different approaches to help users of wearables cameras deal with the undesired dissemination of private information. Such approaches are mostly based on the processing of the captured images once they have been read out from the wearable camera itself into another device - laptop, mobile phone, cloud processor etc.

The issue of privacy has been extensively explored for other visual systems like vision sensor networks and distributed smart cameras [T. Winkler and B. Rinner, "Security and Privacy Protection in Visual Sensor Networks: A Survey," ACM Computing Surveys, vol. 47, no. 1, March 2015 (in print)]; [N. Babaguchi et al. "Intelligent video surveillance for public security and personal privacy," IEEE Transactions on Information Forensics and Security, vol. 8, no. 10, pp.1559-1561, 2013]. However, the operation principles of such systems completely differ from those of wearable cameras. To start with, visual nodes in sensor networks or distributed cameras usually present a fixed location. They also usually sample the surveyed scene in a very high rate when compared to the spare samples of human subject's surroundings performed by wearable cameras. Generally speaking, the techniques devised for privacy protection in the aforementioned visual systems cannot be directly applied to wearable cameras.

### DESCRIPTION OF THE INVENTION

A wearable apparatus is herein described. It comprises at least a camera device, a memory, a processor and a battery module. In a preferred embodiment the memory and the processor are embedded. This apparatus is configured to take images automatically, regularly and autonomously by making use of the camera device. These images correspond to surroundings of the human subject wearing the apparatus.

The apparatus comprises a switch which is configured to select between two mutually exclusive operation modes. These operation modes may be enabled at any moment by the human subject wearing the apparatus. According to a possible embodiment disclosed herein, the switch may be implemented as a double tap on the apparatus case. In a first operation mode, the images captured using the camera device are permanently stored in the memory without any alteration. In the second operation mode, the images captured using the camera device may be altered by the processor before being permanently stored in the memory. The processor is configured to search for prescribed objects within each captured image and to obfuscate said objects. The resulting image is then stored in the memory. In an embodiment of the invention, the search may consist in an algorithm for human face detection. In another embodiment of the invention, the obfuscation may consist in pixelating the detected objects according to a prescribed degree of pixelation.

A visual indicator of the apparatus status informs the human subject wearing the system as well as other human subjects around whether the captured images are being stored unaltered or they are undergoing processing for prescribed object obfuscation. In an embodiment of the invention, the apparatus comprises a display as the visual indicator. In another embodiment, this visual indicator may be implemented by an electronic display showing a human face representation. This representation would keep unchanged when the captured images are being stored unaltered, becoming pixelated when the captured images are undergoing processing for prescribed object obfuscation.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

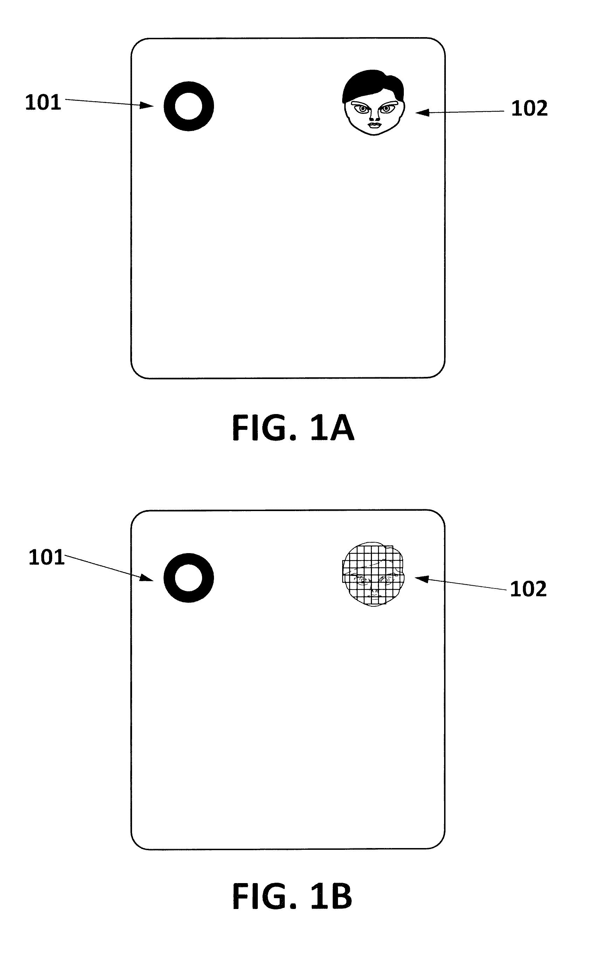

Figure 1 a and figure 1b.- Show the wearable camera apparatus according to an embodiment of the disclosed subject matter. Figure 1a represents such an apparatus when the visual indicator of its status informs that the first mode is selected and the captured images are being stored unaltered. Figure 1b represents the same apparatus but when the visual indicator of its status informs that the second mode is selected and the captured images are undergoing processing for prescribed object obfuscation.

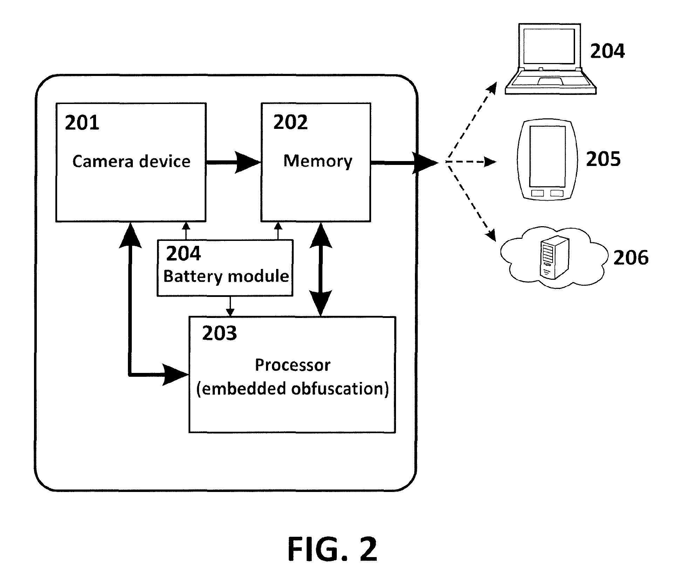

-Figure 2.- Shows a block diagram of the internal apparatus components according to an embodiment of the disclosed subject matter.

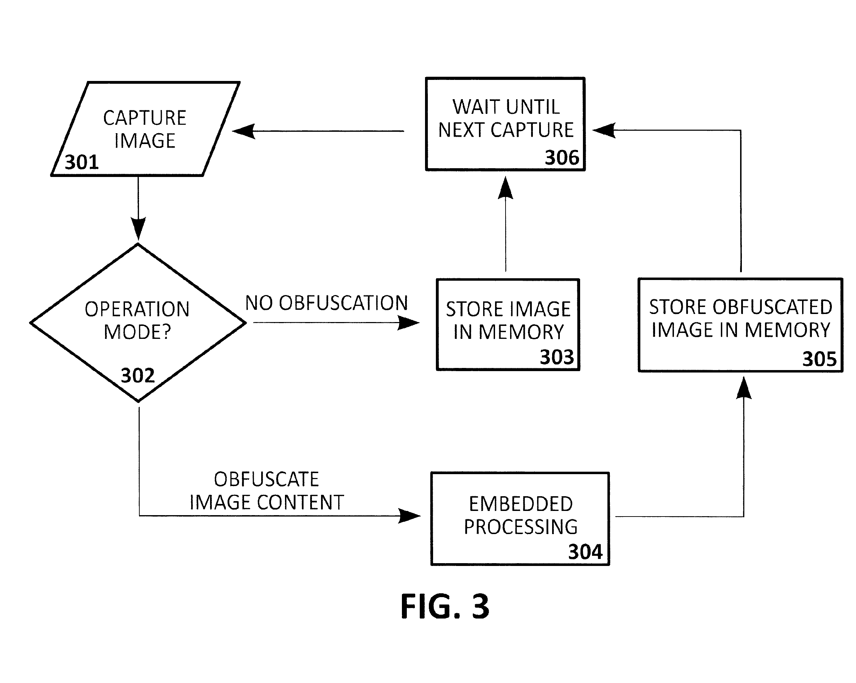

-Figure 3.- Shows a flowchart illustrating the operating principles of a wearable apparatus according to an embodiment of the disclosed subject matter.

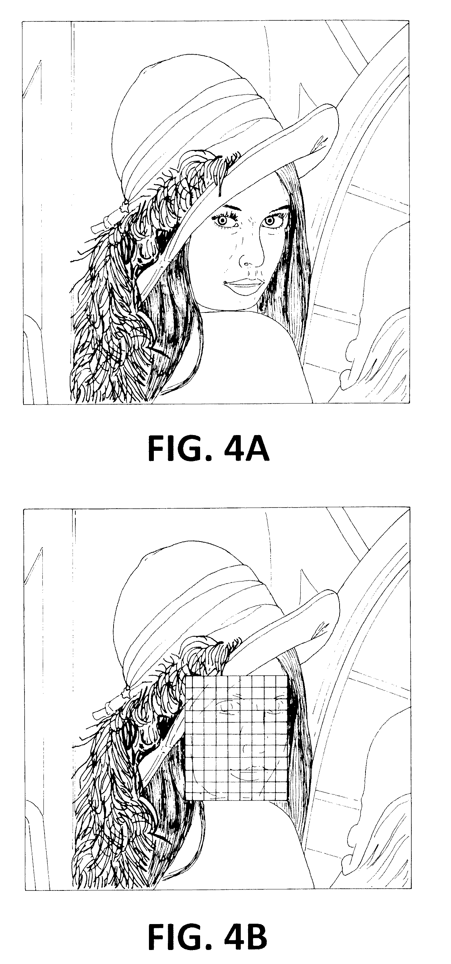

-Figures 4a and 4b.- Show two examples of images captured and stored by a wearable camera apparatus according to an embodiment of the disclosed subject matter. Figure 4a represents an image captured and stored when the first mode is selected. Figure 4b represents the same image but when the second mode is selected and the captured images are undergoing processing for prescribed object obfuscation. In this particular example, the processing consists in an algorithm for human face detection and the obfuscation consists in pixelating the detected faces.

### PREFERRED EMBODIMENT OF THE INVENTION

The preferred embodiment of the present invention is a wearable camera apparatus comprising at least a camera device (201), a memory module (202), a battery module (204) and a processor (203). Furthermore it comprises a switch operable to select one of at least two operation modes which are mutually exclusive:
- a first operation mode which comprises capturing an image and storing the image in the memory without any alteration of its content,
- a second operation mode which comprises capturing an image, possibly altering the image in the processor and storing said altered image in the memory.

Preferably, the external frontal appearance of the apparatus is as depicted in figure 1a. Two elements are noticeable in this figure: a lens (101) associated with the camera device (201) and a display (102) playing the role of a visual indicator.

Preferably, the display (102) is configured to show the selected mode as shown in figures 1a and 1b. A human face like that of figure 1a shown by the display (102) would indicate that the captured images are being stored unaltered. Conversely, a pixelated human face like that of figure 1b shown by the display (102) would indicate that the captured images are undergoing embedded processing for prescribed object obfuscation.

Internally, a basic realization of the disclosed subject matter would be composed of four components, as shown in figure 2: a camera device (201), a memory module (202) and a processor (203), all powered by a battery module (204). According to the operation mode set by the user, the captured images will require obfuscation or will be permanently stored into the memory (202) without changes. In the former case, the processor (203) is configured to search for prescribed objects in the captured image and to obfuscate those objects to obtain the corresponding altered image. A possible technique of obfuscation could be pixelation. The resulting image after this processing stage would then be permanently stored in the memory (202). The user of the wearable system herein described could read out the stored images from the memory (202) at any moment. During this process of readout, the images are transmitted to another device, e.g. a computer (204), a mobile phone (205) or a cloud processor (206).

It is also provided a method of processing images, specially designed to obfuscate prescribed objects appearing in them. The method is designed to be implemented in a wearable camera apparatus as the one previously described. The method is carried out when the second mode is selected and it comprises the steps of:
- capturing an image with the camera device of the wearable apparatus,
- processing the captured image in the processor and deleting the original captured image,
- storing the altered image in the memory.

The step of processing the image may comprise the steps of searching for at least a prescribed object in the captured image, and of obfuscating said prescribed object to obtain the altered image. Additionally the step of obfuscating the prescribed object may be realized by increasing the dimensions of the pixels across the area of the prescribed object.

The different steps involved in the operation of the disclosed system are represented in figure 3. After capturing a new image (301), the next step is determined according to the operation mode set by the user (302). If the just captured image is to be kept unaltered, it is stored into memory (202) without further changes (303). A certain time interval is then waited until capturing the next image (306). Conversely, if the operation mode implies prescribed obfuscation of image content, embedded processing takes place (304) in the processor (203). Once this processing (304) has finished, the resulting image is stored into memory (305). Again a certain time interval is waited in this case until capturing the next image (306).

An example of raw captured image and resulting image after processing (304) are respectively shown in figure 4a and figure 4b. Preferably the step of processing the image comprises running a detection face algorithm. In this particular example, figure 4a represents an image captured and stored when the disclosed apparatus operates in a mode where the captured images are being stored unaltered. Figure 4b represents the same image but when the apparatus operates in a mode where the captured images are undergoing processing (304) for prescribed object obfuscation.

## Claims

1. Wearable camera apparatus comprising at least a camera device, a memory module, a battery module and a processor, and **characterized in that** it comprises a switch operable to select one of at least two operation modes which are mutually exclusive:
- a first operation mode which comprises capturing an image and storing the image in the memory,
- a second operation mode which comprises capturing an image, processing the image in the processor and storing the resulting processed image in the memory.

2. Wearable camera apparatus according to claim 1 **characterised in that** it additionally comprises a display connected to the switch that determines the operation mode selected at any time.

3. Wearable camera apparatus according to claim 1 **characterised in that** the processor is configured to search for prescribed objects in the captured images and to obfuscate those objects to obtain the corresponding processed images when the second operation mode is selected.

4. Method of processing images in a wearable camera apparatus according to any of claims 1 to 3 **characterised in that** it is carried out when the second mode is selected and it comprises the steps of:
- capturing an image with the camera device of the wearable camera apparatus,
- processing the captured image in the processor and deleting the original captured image once this processing finishes,
- storing the resulting processed image in the memory.

5. Method of processing images according to claim 4 **characterised in that** the step of processing the captured image comprises the steps of:
- searching for at least a prescribed object in the captured image,
- obfuscating said prescribed object to obtain the processed image.
